# FASCICULE DE BREVET EUROPEEN

(11) **EP 0 650 275 B1**
(45) Date de publication et mention de la délivrance du brevet: **23.01.2002**
(21) Numéro de dépôt: 94402334.0
(22) Date de dépôt: 18.10.1994
(51) Int. Cl.: H04J 14/08, H04J 3/04, G02B 6/28

(54) **Dispositif de synchronisation pour réseau de communication optique**
Synchronisierungsanordnung für optisches Übertragungsnetz
Synchronisation circuit for an optical telecommunication network

(30) Priorité: 21.10.1993 FR 9312571
(43) Date de publication de la demande: 26.04.1995
(73) Titulaire: ALCATEL, 75008 Paris (FR)
(72) Inventeur: Masetti, Francesco, F-75016 Paris (FR)
(74) Mandataire: Sciaux, Edmond

(56) Documents cités:
- WO-A-93/11579
- IEEE TRANSACTIONS ON COMMUNICATIONS, vol.38, no.6, Juin 1990, NEW YORK US pages 830 - 837, XP148231 NADER MEHRAVARI 'Frame synchronisation in a photonic network of time multiplexed space switches via a feedback scheme.'
- ELECTRONICS LETTERS., vol.21, no.20, 1 Septembre 1985, STEVENAGE GB pages 945 - 946 T. MATSUNAGA ET AL. 'Experimental application of LD switch modules to 256 Mbits/s optical time switching.'
- ELECTRONICS LETTERS., vol.28, no.25, 3 Décembre 1992, STEVENAGE GB pages 2289 - 2291 F.FORGHIERI ET AL. 'Novel packet architecture for all-optical ultrafast packet-switching networks'
- APPLIED PHYSICS LETTERS, vol.57, no.27, 31 Décembre 1990, NEW YORK US pages 2897 - 2898, XP22295 C.SHU ET AL. 'Optoelectronic generation of time division multiplexed ultrafast bit stream on a coplanar waveguide.'

## Description

La présente invention concerne les systèmes de télécommunication à fibres optiques. Elle vise un dispositif de synchronisation de signaux optiques utilisable notamment dans un processeur de paquets de longueur donnée tels que des cellules dans le cadre d'un système fonctionnant en mode de transfert asynchrone (ATM).

Un processeur de cellules est un dispositif opto-électronique d'interfaçage entre un réseau optique éventuellement multiplexé en longueur d'onde et un système de commutation ou de routage réalisé en technologie photonique. Il doit pouvoir effectuer l'ensemble des fonctions de délimitation d'en-tête, synchronisation des cellules sur une horloge locale, traduction d'en-tête, calcul de nouvel en-tête, génération d'informations de routage interne.

Les processeurs de cellules connus pour des systèmes de commutation photoniques mettent en oeuvre des moyens mixtes optiques et électroniques. Leurs dispositifs de synchronisation des cellules réalisent d'abord une détection des signaux optiques puis un traitement des signaux électriques obtenus. Dans le cas où le système de commutation est réalisé en technologie photonique, ces signaux sont ensuite remis sous forme optique par des émetteurs laser.

Le document IEEE Transactions on Communications, vol 38, n°6, juin 1990,New-York, US, pages 830-837, Nader MEHRAVARI décrit un dispositif de synchronisation pour réseau de communi-cation optique, ce dispositif recevant d'une part, sous une forme optique, des signaux à synchroniser, et d'autre part des instants de référence ; et comportant :
- un organe de retard appliquant des retards commandés aux signaux à synchroniser pour assurer leur synchronisation sur les instants de référence, en laissant les signaux à synchroniser sous leur forme optique ;
- et un dispositif de commande de l'organe de retard.

Ce dispositif de commande utilise une matrice de commutation, et plus particulièrement les points de commutation situés sur la diagonale de cette matrice. Chaque terminal utilisateur place une séquence de bits spéciale, au début de chaque trame transmise. Cette séquence constitue une signature facilement identifiable. La matrice de commutation est synchronisée par le signal de référence sur lequel on souhaite synchroniser les trames reçues. Elle est configurée pour fermer tous les points de commutation situés sur la diagonale, pendant la période au début de chaque trame transmise. Le dispositif de commande recherche la signature sur les sorties de la diagonale de la matrice, et ajuste la phase du signal transmis, au moyen de l'organe de retard pour retrouver la signature. La perte éventuelle d'un ou plusieurs bits dans la signature indique qu'il y a une erreur de synchronisation à corriger.

Un but de l'invention est de proposer un dispositif de synchronisation comportant un autre type de dispositif de commande de l'organe de retard, notamment ne comportant pas de matrice de commutation.

L'objet de l'invention est un dispositif de synchronisation pour réseau de communication optique, ce dispositif recevant d'une part, sous une forme optique, des signaux à synchroniser, d'autre part des instants de référence ; et comportant :
- un organe de retard appliquant des retards commandés aux signaux à synchroniser pour assurer leur synchronisation sur les instants de référence, en laissant les signaux à synchroniser sous leur forme optique ;
- et un dispositif de commande de l'organe de retard qui comporte :

- une entrée de signaux pour recevoir une onde porteuse de nature optique portant des signaux à transmettre, ces signaux constituant des signaux informatifs et présentant des instants caractéristiques respectifs, ces instants caractéristiques se succédant les uns aux autres avec des intervalles de temps,
- un organe de reconnaissance recevant une fraction de ladite onde porteuse pour reconnaître et fournir lesdits instants caractéristiques,
- ledit organe de retard pour appliquer à ces signaux des retards commandés,
- une sortie pour recevoir et transmettre les signaux retardés par ledit organe de retard,
- une entrée de référence temporelle pour recevoir des signaux de référence porteurs d'instants de référence, ces instants de référence se succédant les uns aux autres avec des intervalles de temps non supérieurs à ceux desdits instants caractéristiques, de sorte que chaque dit signal informatif présente un décalage temporel qui est le temps séparant son instant caractéristique de l'instant de référence suivant, et
- un comparateur recevant lesdits instants caractéristiques et de référence et fournissant pour chacun desdits signaux à transmettre un signal de sélection représentatif du décalage temporel de ce signal, ce comparateur commandant ledit organe de retard par lesdits signaux de sélection pour lui faire retarder chaque signal à transmettre d'un temps égal à son décalage temporel de manière à faire coïncider chaque dit instant caractéristique avec un dit instant de référence ;
**caractérisé par le fait que** ledit organe de retard comporte un substrat semi-conducteur intégrant un chemin optique planaire, ce chemin comportant :
- une entrée pour recevoir ladite onde porteuse,
- des sorties pour permettre chacune la sortie d'une fraction sortante de cette onde,
- un premier guide pour guider cette onde de ladite entrée jusqu'à une première sortie, un deuxième guide pour guider une fraction restante de cette onde de cette première sortie à une deuxième sortie, un troisième guide pour guider une fraction restante de cette deuxième sortie à une troisième sortie , et ainsi de suite jusqu'à une dernière sortie, certains au moins desdits guides comportant des amplificateurs pour maintenir la puissance de l'onde porteuse,
ledit substrat intégrant en outre un organe de sélection pour sélectionner sur commande l'une desdites sorties dudit chemin optique, et pour connecter la sortie sélectionnée à ladite sortie du processeur.

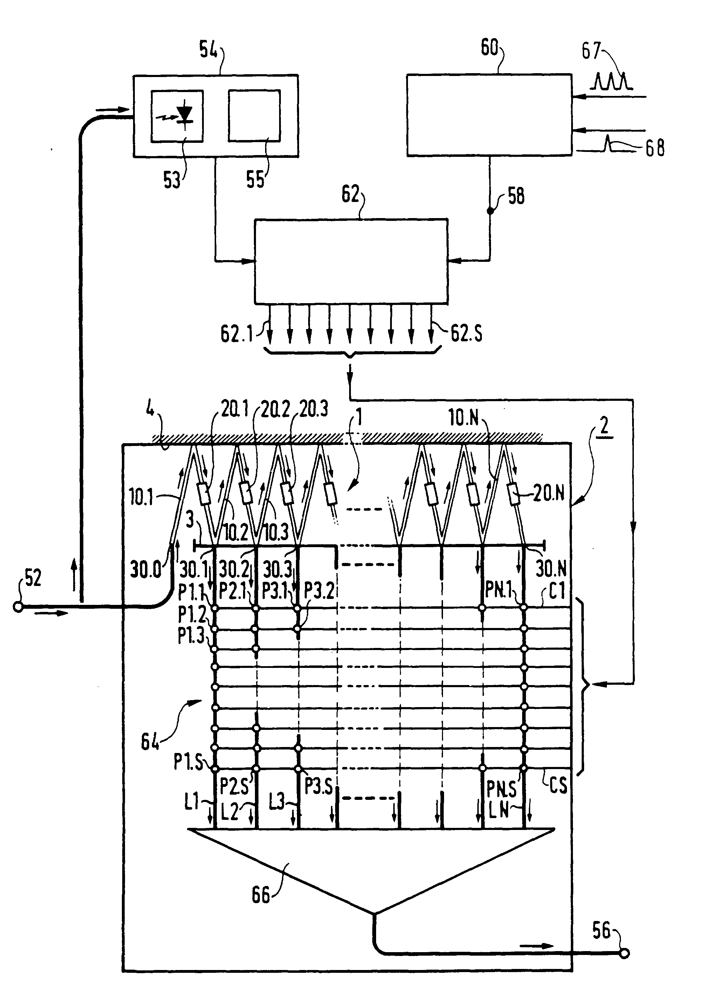

A l'aide de la figure schématique ci-jointe, on va décrire plus particulièrement ci-après, à titre d'exemple non limitatif, comment la présente invention peut être mise en oeuvre.

La figure unique représente une vue d'ensemble d'un dispositif selon la présente invention.

Ce dispositif comporte les éléments suivants :
- Une entrée de signaux 52 connectée à une fibre optique pour recevoir une onde porteuse de nature optique. Cette onde porte des signaux à transmettre, par exemple des signaux informatifs, tels que des bits, des cellules constituées de bits, des paquets constitués de cellules, ou des trames constituées de paquets dans le cadre d'un système de transmission d'informations en mode asynchrone. Ces signaux présentent des instants caractéristiques respectifs tels que le début d'un tel signal, ou une impulsion de repérage temporel insérée dans un tel signal avec un niveau de puissance supérieure. Ces instants caractéristiques se succèdent les uns aux autres avec des intervalles de temps qui sont aléatoires mais qui ne présentent que des écarts limités par rapport à des intervalles réguliers ou connus.
- Un organe de reconnaissance 54 pour reconnaître et fournir les instants caractéristiques de ces signaux informatifs. Cet organe reçoit pour cela une fraction, de préférence minoritaire, de l'onde porteuse. Il comporte par exemple un organe optoélectronique 53 pour recevoir une fraction de l'onde porteuse et la détecter. Il comporte alors aussi
un circuit électronique 55 tel qu'un processeur ou un détecteur de seuil pour reconnaître les instants caractéristiques de ces signaux, et pour les fournir sous la forme de signaux électriques au comparateur.
- Un organe de retard 2 pour appliquer à ces signaux informatifs des retards commandés. Cet organe est de nature optique. Il retarde les signaux informatifs en recevant, retardant et restituant ladite onde optique sans convertir ces signaux sous forme électronique. Un exemple d'un tel organe sera décrit plus loin.
- Une sortie 56 pour recevoir et transmettre les signaux informatifs qui ont été retardés dans l'organe de retard.
- Une entrée de référence temporelle 58 pour recevoir des signaux de référence porteurs d'instants de référence. Ces instants de référence se succédent les uns aux autres avec des intervalles de temps non supérieurs à ceux desdits instants caractéristiques. Il en résulte que, pour chaque signal informatif, on peut définir un décalage temporel qui est le temps séparant l'instant caractéristique de ce signal de l'instant de référence suivant. Les signaux de référence sont par exemple fournis par un générateur de référence tel qu'un compteur 60. Ce générateur reçoit des impulsions d'horloge, telles que des impulsions de bits 67 et ou des impulsions 68 d'intervalles pour cellules. Il compte ces impulsions pour fournir en réponse les instants de référence au comparateur 62, par exemple sous la forme de signaux électriques.
- Enfin un comparateur 62, reçoit les instants caractéristiques et les instants de référence. Il fournit pour chacun des signaux informatifs un signal de sélection représentatif du décalage temporel de ce signal informatif. Il commande l'organe de retard 2 par ces signaux de sélection pour appliquer à chaque signal informatif un retard égal à son décalage temporel. Il amène ainsi chaque instant caractéristique en coïncidence avec un instant de référence, ce qui réalise la synchronisation qui était souhaitée.

De préférence l'organe de retard comporte un substrat semi-conducteur 2 intégrant un chemin optique planaire 1. Ce chemin comporte :
- une entrée 30.0 pour recevoir l'onde porteuse,
- des sorties 30.1...30.N pour permettre chacune la sortie d'une fraction sortante de cette onde,
- et un premier guide 10.1 pour guider cette onde de ladite entrée jusqu'à une première sortie 30.1, un deuxième guide 10.2 pour guider une fraction restante de cette onde de cette première sortie à une deuxième sortie 30.2, un troisième guide 10.3 pour guider une fraction restante de cette deuxième sortie à une troisième sortie 30.3, et ainsi de suite jusqu'à une dernière sortie 30.N. Certains au moins desdits guides, et de préférence tous ces guides, comportent des amplificateurs 20.1...20.N pour maintenir la puissance de l'onde porteuse sensiblement constante.

De préférence le chemin optique 1 est replié sur lui-même entre deux surfaces opposées 3 et 4 formées par le substrat 2. Les sorties 30.1...30.N de ce chemin sont disposées le long d'une surface 3 partiellement réfléchissante. Une surface opposée 4 est munie d'un revêtement réfléchissant la lumière d'une partie à une autre de chaque guide.

Le substrat 2 intégre en outre un organe de sélection 64. Ce dernier sélectionne sur commande l'une des sorties 30.1...30.N du chemin optique, et il connecte la sortie sélectionnée à la sortie 56 du dispositif.

De préférence encore le comparateur 62 fournit chaque signal de sélection sous une forme codée binaire constituée par une succession de S bits de sélection définissant collectivement une valeur de ce signal. Ces bits sont fournis sur des sorties respectives 62.1...62.S de ce comparateur. L'organe de sélection 64 présente la forme d'une matrice de N lignes L1...LN et de S colonnes C1...CS. Chaque ligne telle que L3 est constituée par un guide optique connectant une sortie respective telle que 30.3 du chemin optique 1 à la sortie 56 du dispositif par l'intermédiaire d'un concentrateur 66. Cette ligne comporte en série une succession de portes optiques telles que P3.1...P3.S pouvant chacune être ouverte ou fermée de sorte que cette ligne est ouverte si toutes ses portes sont ouvertes et que cette ligne est fermée si l'une au moins de ses portes est fermée. Chaque porte optique est commandée sous forme binaire en recevant un bit. Elle a reçu une adaptation aux bits zéro ou aux bits un pour être ouverte seulement lorsqu'elle reçoit un bit zéro ou pour être ouverte seulement lorsqu'elle reçoit un bit un, respectivement. Chaque colonne telle que C3.3 de la matrice est alimentée par une sortie respective 62.S du comparateur 62. Elle alimente en parallèle par un même bit de sélection une succession de N portes optiques telles que P1S...PNS appartenant respectivement aux N lignes. Les adaptations des portes optiques sont choisies pour faire apparaître une correspondance respective entre les lignes et les valeurs du signal de sélection. Cette correspondance est telle que chaque ligne est seule à être ouverte par un signal de sélection dont la valeur présente cette correspondance avec cette ligne.

Ces portes optiques sont par exemple constituées par des phototransistors.

On peut consulter à ce sujet les documents suivants :
- Photonic time-switching using semiconductor optical amplifier gates and fibre delay line optical buffer - P. MORIN , D. CHIARONI, J.B. JACOB, G. Da LOURA, J.M. GABRIAGUES, B. FERNIER - International Topical Meeting on PHOTONIC SWITCHING - July 1-3,1992 - PHOTONIC SWITCHING.92 - Conference Hall of Academy of Sciences, Minsk, Republic of Belarus.
- Y-shaped semiconductor device as a basis for various photonic switching applications - K. WUNSTEL, W. IDLER, M. SCHILLING, G. LAUBE, D. BAUMS, O. HILDEBRAND - OFC'92 Cosponsored by Optical Society of America - IEEE/Communications Society - IEEE/Lasers and Electro-Optics Society - TECHNICAL DIGEST, p.125.
- Optically Controlled semiconductor Optical Amplifier Gates - C. JOERGENSEN, T. DURHUUS, B. FERNIER, P. GARABEDIAN, E. DEROUIN, F. LEBLOND, B. MIKKELSEN, K.E. STUBKJAER - ECOC' 92 - Technische Universität Berlin - Berlin, Germany - Proceedings, volume 1, Regular papers, p.377-380.
- Light Amplification Functional Devices - Akio Sasaki.- Optical Computing in Japan - Edited by S. Ishihara - Nova Science Publishers, 1990 Commack.

## Revendications

1. Dispositif de synchronisation pour réseau de communication optique, ce dispositif recevant d'une part, sous une forme optique, des signaux à synchroniser, d'autre part des instants de référence ; et comportant :
- un organe de retard (2) appliquant des retards commandés aux signaux à synchroniser pour assurer leur synchronisation sur les instants de référence, en laissant les signaux à synchroniser sous leur forme optique ;
- et un dispositif (54, 60, 62) de commande de l'organe de retard (2) qui comporte :
-- une entrée de signaux (52) pour recevoir une onde porteuse de nature optique portant des signaux à transmettre, ces signaux constituant des signaux informatifs et présentant des instants caractéristiques respectifs, ces instants caractéristiques se succédant les uns aux autres avec des intervalles de temps,
-- un organe de reconnaissance (54) recevant une fraction de ladite onde porteuse pour reconnaître et fournir lesdits instants caractéristiques,
-- ledit organe de retard (2) pour appliquer à ces signaux des retards commandés,
-- une sortie (56) pour recevoir et transmettre les signaux retardés par ledit organe de retard,
-- une entrée de référence temporelle (58) pour recevoir des signaux de référence porteurs d'instants de référence, ces instants de référence se succédant les uns aux autres avec des intervalles de temps non supérieurs à ceux desdits instants caractéristiques, de sorte que chaque dit signal informatif présente un décalage temporel qui est le temps séparant son instant caractéristique de l'instant de référence suivant, et
-- un comparateur (62) recevant lesdits instants caractéristiques et de référence et fournissant pour chacun desdits signaux à transmettre un signal de sélection représentatif du décalage temporel de ce signal, ce comparateur (62) commandant ledit organe de retard (2) par lesdits signaux de sélection pour lui faire retarder chaque signal à transmettre d'un temps égal à son décalage temporel de manière à faire coïncider chaque dit instant caractéristique avec un dit instant de référence ;
**caractérisé par le fait que** ledit organe de retard comporte un substrat semi-conducteur (2) intégrant un chemin optique planaire (1), ce chemin comportant :
- une entrée (30.0) pour recevoir ladite onde porteuse,
- des sorties (30.1...30.N) pour permettre chacune la sortie d'une fraction sortante de cette onde,
- un premier guide (10.1) pour guider cette onde de ladite entrée jusqu'à une première sortie (30.1), un deuxième guide (10.2) pour guider une fraction restante de cette onde de cette première sortie à une deuxième sortie (30.2), un troisième guide (10.3) pour guider une fraction restante de cette deuxième sortie à une troisième sortie (30.3), et ainsi de suite jusqu'à une dernière sortie (30.N), certains au moins desdits guides comportant des amplificateurs (20.1...20N) pour maintenir la puissance de l'onde porteuse,
ledit substrat (2) intégrant en outre un organe de sélection (64) pour sélectionner sur commande l'une desdites sorties (30.1...30.N) dudit chemin optique, et pour connecter la sortie sélectionnée à ladite sortie (56) du processeur.

2. Dispositif selon la revendication 1, **caractérisé par le fait que** ledit comparateur (62) fournit chaque dit signal de sélection sous une forme codée binaire constituée par une succession de S bits de sélection définissant collectivement une valeur de ce signal et fournis sur des sorties respectives (62.1...62.S) de ce comparateur, ledit organe de sélection (64) présentant la forme d'une matrice de N lignes (L1...LN) et de S colonnes (C1...CS), chaque ligne (telle que L3) étant constituée par un guide optique connectant une sortie respective (telle que 30.3) dudit chemin optique à la sortie (56) dudit dispositif par l'intermédiaire d'un concentrateur (66), cette ligne comportant en série une succession de portes optiques (telles que P3.1 ...P3.S) pouvant chacune être ouverte ou fermée de sorte que cette ligne est ouverte si toutes ses portes sont ouvertes et que cette ligne est fermée si l'une au moins de ses portes est fermée, chaque dite porte optique étant commandée sous forme binaire en recevant un bit et en ayant une adaptation aux bits zéro ou aux bits un pour être ouverte seulement lorsqu'elle reçoit un bit zéro ou pour être ouverte seulement lorsqu'elle reçoit un bit un, respectivement, chaque colonne (telle que C3.S) de ladite matrice étant alimentée par une sortie respective (62.S) dudit comparateur (62) et alimentant en parallèle par un dit bit de sélection une succession de N dites portes optiques (telles que P1S...PNS) appartenant respectivement aux N dites lignes, lesdites adaptations des portes optiques faisant apparaître une correspondance respective entre lesdites lignes et les valeurs dudit signal de sélection, chaque dite ligne étant seule à être ouverte par un signal de sélection dont la valeur présente ladite correspondance avec cette ligne.

3. Dispositif selon la revendication 1, **caractérisé par le fait qu'**il comporte en outre un générateur de référence (60) recevant des impulsions d'horloge (67, 68) et les comptant pour fournir en réponse lesdits instants de référence audit comparateur (62).

## Patentansprüche

1. Synchronisationsvorrichtung für ein optisches Kommunikationsnetz, wobei diese Vorrichtung einerseits zu synchronisierende Signale in optischer Form und andererseits Bezugszeitpunkte empfängt und umfasst:
- eine Verzögerungseinrichtung (2), die gesteuerte Verzögerungen auf zu synchronisierende Signale anwendet, um ihre Synchronisation mit den Bezugszeitpunkten sicherzustellen, wobei die zu synchronisierenden Signale in ihrer optischen Form belassen werden;
- und eine Steuereinrichtung (54, 60, 62) für die Verzögerungseinrichtung (2), die umfasst:
-- einen Signaleingang (52) zum Empfangen einer Trägerwelle von optischer Natur, die zu übertragende Signale trägt, wobei diese Signale Informationssignale bilden und jeweilige charakteristische Zeitpunkte aufweisen, wobei diese charakteristischen Zeitpunkte mit Zeitintervallen aufeinanderfolgen,
-- eine Erkennungseinrichtung (54), die einen Anteil der Trägerwelle empfängt, um die charakteristischen Zeitpunkte zu erkennen und zu bereitzustellen;
-- die Verzögerungseinrichtung (2), um auf diese Signale gesteuerte Verzögerungen anzuwenden,
-- einen Ausgang (56), um die durch die Verzögerungseinrichtung verzögerten Signale zu empfangen und zu übertragen,
-- einen Zeitbezugseingang (58) zum Empfangen von Trägerbezugssignalen für Bezugszeitpunkte, wobei diese Bezugszeitpunkte mit Zeitintervallen aufeinanderfolgen, die nicht größer als diejenigen der charakteristischen Zeitpunkte sind, so dass jedes Informationssignal eine zeitliche Verschiebung aufweist, die die Zeit ist, die seinen charakteristischen Zeitpunkt vom folgenden Bezugszeitpunkt trennt, und
-- einen Komparator (62), der die charakteristischen und Bezugszeitpunkte empfängt und für jedes der zu übertragenden Signale ein Auswahlsignal bereitstellt, das die zeitliche Verschiebung dieses Signals darstellt, wobei dieser Komparator (62) die Verzögerungseinrichtung (2) durch die Auswahlsignale steuert, um sie jedes zu übertragende Signal um eine Zeit gleich seiner zeitlichen Verzögerung verzögern zu lassen, um jeden charakteristischen Zeitpunkt mit einem Bezugszeitpunkt zusammenfallen zu lassen;
**dadurch gekennzeichnet, dass** die Verzögerungseinrichtung ein Halbleitersubstrat (2) umfasst, das einen planaren optischen Weg (1) integriert, wobei dieser Weg umfasst:
- einen Eingang (30.0) zum Empfangen der Trägerwelle,
- Ausgänge (30.1...30.N), um jeweils den Ausgang eines abgehenden Anteils dieser Welle zu gestatten,
- einen ersten Leiter (10.1), um diese Welle vom Eingang zu einem ersten Ausgang (30.1) zu leiten, einen zweiten Leiter (10.2), um einen verbleibenden Anteil dieser Welle von diesem ersten Ausgang zu einem zweiten Ausgang (30.2) zu leiten, einen dritten Leiter (10.3), um einen verbleibenden Anteil von diesem zweiten Ausgang zu einem dritten Ausgang (30.3) zu leiten usw. bis zu einem letzten Ausgang (30.N), wobei wenigstens einige der Leiter Verstärker (20.1...20.N) umfassen, um die Leistung der Trägerwelle aufrechtzuerhalten,
wobei das Substrat (2) außerdem eine Auswahleinrichtung (64) integriert, um auf Befehl einen der Ausgänge (30.1...30.N) des optischen Weges auszuwählen und um den ausgewählten Ausgang mit dem Ausgang (56) des Prozessors zu verbinden.

2. Vorrichtung nach Anspruch 1, **dadurch gekennzeichnet, dass** der Komparator (62) jedes Auswahlsignal in binär codierter Form bereitstellt, die aus einer Folge von S Auswahlbits besteht, die zusammen einen Wert dieses Signals definieren und auf jeweiligen Ausgängen (62.1...62.S) dieses Komparators bereitgestellt werden, wobei die Auswahleinrichtung (64) die Form einer Matrix mit N Zeilen (L1...LN) und S Spalten (C1...CS) aufweist, wobei jede Zeile (wie L3) aus einem optischen Leiter besteht, der einen jeweiligen Ausgang (wie 30.3) des optischen Weges mit dem Ausgang (56) der Vorrichtung über einen Konzentrator (66) verbindet, wobei diese Zeile hintereinander eine Folge von photonischen logischen Gattern (wie P3.1...P3.S) aufweist, die jeweils offen oder geschlossen sein können, so dass diese Zeile offen ist, wenn alle ihre Gatter offen sind, und diese Zeile geschlossen ist, wenn wenigstens eines ihrer Gatter geschlossen ist, wobei jedes optische logische Gatter in binärer Form gesteuert wird, indem es ein Bit empfängt und eine Anpassung auf Bits Null oder auf Bits Eins aufweist, um nur offen zu sein, wenn es ein Bit Null empfängt bzw. um nur offen zu sein, wenn es ein Bit Eins empfängt, wobei jede Spalte (wie C3.S) der Matrix von einem jeweiligen Ausgang (62.S) des Komparators (62) versorgt wird und parallel eine Folge von N photonischen logischen Gattern (wie P1S...PNS) mit einem Auswahlbit versorgt, wobei die Anpassungen der photonischen logischen Gatter eine jeweilige Entsprechung zwischen den Zielen und den Werten des Auswahlsignals auftreten lässt, wobei jede Zeile nur von einem Auswahlsignal geöffnet wird, dessen Wert die Entsprechung mit dieser Zeile aufweist.

3. Vorrichtung nach Anspruch 1, **dadurch gekennzeichnet, dass** sie außerdem einen Bezugsgenerator (60) umfasst, der Taktimpulse (67, 68) empfängt und sie zählt, um in Antwort die Bezugszeitpunkte an den Komparator (62) zu liefern.

## Claims

1. Synchronization apparatus for an optical communications network, the apparatus receiving firstly signals to be synchronized, the signals being received in an optical form, and secondly reference instants, and including:
a delay member (2) applying controlled delays to the signals to be synchronized so that the signals are synchronized on the reference instants while leaving the signals to be synchronized in their optical form; and
a control device (54, 60, 62) for controlling the delay member (2) which device includes:
a signal input (52) for receiving an optical-type carrier wave carrying signals to be transmitted, the signals constituting information signals and having respective characteristic instants, the characteristic instants succeeding one another at time intervals;
a recognition member (54) receiving a fraction of said carrier wave, for recognizing and supplying said characteristic instants;
said delay member (2) for applying controlled delays to the signals;
an output (56) for receiving and transmitting the signals delayed by said delay member;
a time reference input (58) for receiving reference signals carrying reference instants, the reference instants succeeding one another at time intervals that are not greater than those of said characteristic instants, so that each of said information signals has a time offset which is the time between its characteristic instant and the following reference instant; and
a comparator (62) receiving said characteristic instants and said reference instants, and supplying, for each of said signals to be transmitted, a selection signal representing the time offset of the signal, the comparator (62) controlling said delay member (2) via said selection signal so as to cause the delay member to delay each signal to be transmitted by a time equal to its time offset so that each of said characteristic instants is caused to coincide with one of said reference instants,
said apparatus being **characterized by** the fact that said delay member includes a semiconductive substrate (2) incorporating a planar optical path (1), which path includes:
an input (30.0) for receiving said carrier wave;
outputs (30.1, ..., 30.N), each output enabling an output fraction of the wave to be output; and
a first waveguide (10.1) for guiding the wave from said input to a first output (30.1), a second waveguide (10.2) for guiding a remaining fraction of the wave from the first output to a second output (30.2), a third waveguide (10.3) for guiding a remaining fraction from the second output to a third output (30.3), and so on to a last output (30.N), at least some of said waveguides including amplifiers (20.1, ..., 20N) for maintaining the power of the carrier wave;
said substrate (2) further incorporating a selection member (64) for selecting one of said outputs (30.1, ..., 30.N) of said optical path on command, and for connecting the selected output to said output (56) of the processor.

2. Apparatus according to claim 1, **characterized by** the fact that said comparator (62) supplies each of said selection signals in a binary encoded form constituted by a succession of S selection bits that collectively define a value of the signal and that are supplied via respective outputs (62.1, ..., 62.5) of the comparator, said selection member (64) being in the form of a matrix having N rows (L1, ..., LN) and S columns (C1, ..., CS), each row (such as L3) being constituted by an optical waveguide connecting a respective output (such as 30.3) of said optical path to the output (56) of said apparatus via a concentrator (66), each row including, in series, a succession of optical gates (such as P3.1, ..., P3.S), each of which can be opened or closed so that each row is open if all of its gates are open, and each row is closed if at least one of its gates is closed, each of said optical gates being controlled in binary form by receiving a bit and by being adapted to respond to zero bits or to one bits so as to be open only when it receives a zero bit or so as to be open only when it receives a one bit, each column (such as C3.S) of said matrix being fed via a respective output (62.S) of said comparator (62), and feeding, in parallel, a succession of N of said optical gates (such as P1S, ..., PNS) via one of said selection bits, the succession of N optical gates belonging to respective ones of the N rows, the adaptations of said optical gates showing up a respective correspondence between said rows and the values of said selection signal, each of said rows being the only one to be opened by a selection signal whose value has said correspondence with the row.

3. Apparatus according to claim 1, **characterized by** the fact that it further includes a reference generator (60) receiving clock pulses (67, 68) and counting them so as to respond by supplying said reference instants to said comparator (62).
